# EUROPEAN PATENT SPECIFICATION

(11) **EP 0 943 235 B1**
(45) Date of publication and mention of the grant of the patent: **26.11.2003**
(21) Application number: 99200827.6
(22) Date of filing: 16.03.1999
(51) Int. Cl.: A01K 1/01, G05D 1/02

(54) **Apparatus for cleaning a stable**
Vorrichtung zum Reinigen von Stallungen
Dispositif pour le nettoyage des locaux d'élevage

(30) Priority: 17.03.1998 NL 1008612
(43) Date of publication of application: 22.09.1999
(73) Proprietor: J.O.Z. B.V., 1617 KK Westwoud (NL)
(72) Inventor: van der Ploeg, Evert, 9076 LC Sint Annaparochie (NL)
(74) Representative: Van Breda, Jacobus

(56) References cited:
- EP-A- 0 402 764
- WO-A-96/14735
- DE-A- 19 614 916
- FR-A- 2 718 606

## Description

The invention relates to an apparatus for cleaning a stable, comprising a cleaning slide which, during use is arranged such as to be movable in the aisle of a cattle shed, and which is provided with a motor drive for moving the apparatus as an autonomically movable vehicle onto which the cleaning slide is mounted, and which is provided with wheel members.

Such an apparatus is known from FR-A-2.718.606.

A draw-back of the apparatus known from FR-A-2.718.606 is that it only allows for a movement of the vehicle which is defined by a slit in the bottom of the cattle shed, which slit is followed by guide members mounted in front and in rear of the vehicle.

DE-C-44.44.508 relates to an apparatus for cleaning a stable, comprising a cleaning slide which, during use is arranged such as to be movable in the aisle of a cattle shed, and which is provided with a control unit and a motor drive for moving, under control of the control unit, the cleaning slide in the aisle, the control unit being connected with sensor means and the control unit comprising control logic for emitting a sensor means-dependent control signal to the motor drive. This publication discloses a method and an apparatus for cleaning a stable in which a slide is moved to and fro over the entire width of the aisle of the cattle shed. The slide moves by means of a chain connected with the slide, which is coupled to drive means in the cattle shed.

With the apparatus known from DE-C-44.44.508, the method is realized in a manner such that the slide movement is interrupted when and as soon as a cow comes in front of the slide. After a short interval the sliding motion recommences, moving to and fro until the cow has moved and the cleaning motion of the slide can be continued.

A drawback of this known apparatus is that the slide will always have to be made to fit into the aisle in which it is to be used, this involves relatively high installation costs. It is therefore not possible to standardize such a cleaning apparatus. An additional drawback is that the known cleaning apparatus is only suitable for cleaning the aisle, while other parts in the cattle shed are just as much in need of regular cleaning.

The Dutch patent 1002487 discloses a construction for cleaning a stable for animals such as cows, in which movable cleaning means are used with the aid of which the stable floor can be cleaned selectively. The cleaning means comprise a manure suction installation which is suspended from the ceiling of the stable such as to be movable along it via a rail construction.

The apparatus for cleaning a stable according to the invention is characterized in that it comprises a control unit that is connected with sensor means and the control unit comprising control logic for emitting a sensor means-dependent control signal to the motor drive, and that at least one of the wheels being adjustable for determining the vehicle's direction, that the vehicle is provided with means for determining its position in the cattle shed that collaborate with markers positioned in the cattle shed, and that the control unit is equipped with a memory for storing data about the cattle shed, the position of the vehicle in the cattle shed, and a plan of the route along which the vehicle is to move in the cattle shed. Such a vehicle may be designed such that it can also easily move to places other than the aisle, in particular also to places that are relatively narrow. The route plan of the vehicle can then simply be adjusted to the possibilities the vehicle offers for cleaning such inconveniently accessible places in the cattle shed.

It is noted that the German Offenlegungsschrift DE-A-19 614 916 and the American patent specifications US-A-5 204 814 and US-A-5 440 216 disclose automatically movable vehicles or robots with a cleaning or floor treatment function. However, these publications relate to vehicles that are not equipped to clean cattle sheds.

In a further aspect of the apparatus for cleaning a stable in accordance with the invention, said apparatus is characterized in that the means for determining the position of the vehicle in the cattle shed are selected from the group comprising laser means, infrared means, radiographical means, induction means. This also comprises, for instance, the global positioning system G.P.S. By these means the vehicle can perform an absolute determination of position in the cattle shed as a control on the cleaning route to be completed; these means can also be applied such that an incremental change in the vehicle's position in the cattle shed is registered. In the latter case it is also desirable that the possibility of calibration exist in respect of the position of the vehicle in the cattle shed. An advantageous embodiment of this will be explained below.

The determination of the vehicle's position in the cattle shed is optimized by the feature that the means for determining the position of the vehicle in the cattle shed collaborate with markers positioned in the cattle shed. To enhance the precision of the determination of the vehicle's position in the cattle shed further it is desirable that the means for determining the position of the vehicle in the cattle shed comprise recorders connected with the wheels for registering the number of revolutions of the wheels and the position of the wheel that determines the vehicle's direction. By combining the respective positioning data, said provisions, together with the means for determining the vehicle's position in the cattle shed mentioned earlier, will result in optimized position determination. It is, however, also possible to use the means for determining the position of the vehicle discussed above individually.

The vehicle according to the invention may be fed, for example, via a live wire netting provided in the cattle shed and under which the vehicle moves. The supply voltage can then be taken off by means of a sliding contact against the wire netting.

It was already indicated above that preferably means are provided for the calibration of the vehicle's position in the cattle shed. A particularly favourable embodiment of this kind is characterized in that the vehicle is provided with an energy storage unit for the motor drive, and that while the energy storage unit is connected with a charging device provided in the cattle shed, the vehicle's position stored in the memory is adjusted to a preselected absolute value that represents the position of the charging device in the cattle shed. It is also desirable that at least the front and rear of the vehicle be provided with sensor means for the perception of an obstacle such as a cow, another animal or a person.

According to yet another aspect of the invention, the control unit is equipped to register the energy level in the energy storage unit, so that if the energy level falls below a preset value, the control unit will direct the vehicle to the charging device. This makes it possible to provide a fully automized apparatus for cleaning a stable, which includes the vehicle that is part thereof.

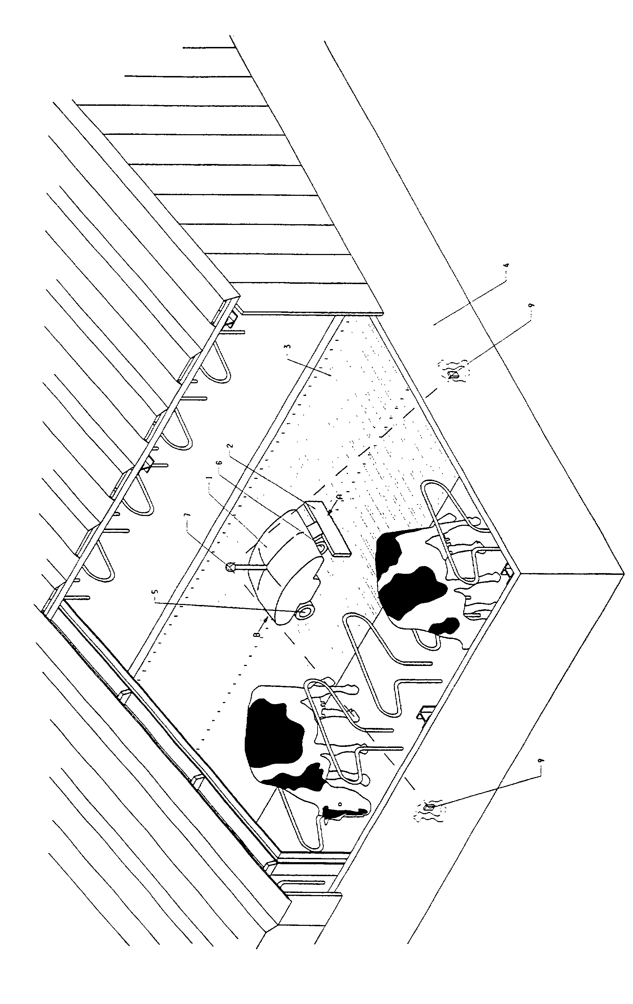

The invention will now be explained in more detail with reference to the drawing which represents in a single figure a perspective view of the apparatus for cleaning a stable according to the invention.

The apparatus for cleaning a stable 1 is provided with a cleaning slide 2. The apparatus for cleaning a stable 1 is arranged such as to be movable in the aisle 3 of a cattle shed 4, by being equipped as an autonomically movable vehicle 1 onto which the cleaning slide 2 is mounted.

The cleaning slide may be selected from various kinds of manure slides, such as combislide, grid slide, folding slide, slotted slide and hill and valley-slide any other suitable slide. These slides are known to the expert and require no further explanation.

The vehicle 1 is provided with wheel members 5 and 6, of which wheel 6 is adjustable to allow the vehicle 1 to be steered. Further, the vehicle 1 is provided with means for determining its position in the cattle shed. These means carry reference number 7 and may be selected from the group comprising laser means, infrared means, radiographical means, among which G.P.S., and induction means. For example, in the case of induction means an induction loop may be provided in the cattle shed 4, defining the route along which the vehicle 1 is to be moved through the cattle shed 4.

The wheel members are driven by a motor drive incorporated in the vehicle 1. The motor drive is controlled by a control unit 8. The control unit 8 is further equipped with a memory unit for storing data about the cattle shed such as the length and the width of the aisle 3. The memory unit further serves for registering the actual position that the vehicle 1 is occupying in the cattle shed 4 and to adjust the same to the movements undertaken by the vehicle 1 in concurrence with or in deviation of the route plan which is also stored in the memory and according to which the vehicle 1 is supposed to move in the cattle shed 4.

To increase the precision of the system for determining the position the vehicle 1, or at least the means for determining the position of the vehicle 1, can collaborate with markers positioned in the cattle shed. A few markers are indicated with reference number 9 in the cattle shed 4. Such markers 9 act, for example, as reflector for the signals emitted by the means 7. In order to be able to extract the directional component from said signals, the means 7 will emit the signals unidirectionally, not omnidirectionally. The direction in which the signals are emitted is then adjustable. Furthermore, the vehicle 1 may be equipped such that the wheels 5, 6 are coupled with recorders for registering the number of revolutions of the wheels 5, 6 make and the position of the wheel 6 determining the vehicle's direction. In addition it is desirable that means be provided for the calibration of the memory-stored position of the vehicle 1 in the cattle shed. This memory is part of the control unit 8. Preferably the vehicle 1 is provided with an energy storage unit for the motor drive of the wheels 5, 6. The vehicle's 1 position in the cattle shed, stored in the memory, may then preferably be related to a charging device for the energy storage unit provided in the stable 4, such that while the energy storage unit of the vehicle 1 is connected with a charging device provided in the cattle shed 4, the vehicle's position stored in the memory is adjusted to a preselected absolute value which represents the position of the charging device.

The vehicle 1 is at least at the front and rear (in the Figure indicated by arrows A and B, respectively) provided with sensor means for the perception of an obstacle such as a cow. Furthermore, the control unit 8 is equipped to register the energy level in the energy storage unit 10, so that if the energy level falls below a preset value, the control unit 8 will direct the vehicle 1 to the charging device provided in the cattle shed 4.

To the expert it will be obvious that the preceding specification relates only to a few possible embodiments of the apparatus for cleaning a stable according to the invention, and that diverse variations are conceivable which are all deemed to be within the scope of the appended claims.

## Claims

1. An apparatus for cleaning a stable, comprising a cleaning slide (2) which, during use is arranged such as to be movable in the aisle (3) of a cattle shed (4), and which is provided with a motor drive for moving the apparatus as an autonomically movable vehicle onto which the cleaning slide (2) is mounted, and which is provided with wheel members (5, 6), **characterized in that** it comprises a control unit (8) that is connected with sensor means and the control unit (8) comprising control logic for emitting a sensor means-dependent control signal to the motor drive, and that at least one (6) of the wheels (5, 6) being adjustable for determining the vehicle's direction, that the vehicle (1) is provided with means (7) for determining its position in the cattle shed (4) that collaborate with markers (9) positioned in the cattle shed, and that the control unit (8) is equipped with a memory for storing data about the cattle shed (4), the position of the vehicle (1) in the cattle shed (4), and a plan of the route along which the vehicle (1) is to move in the cattle shed (4).

2. An apparatus for cleaning a stable according to claim 1, **characterized in that** the means (7) for determining the position of the vehicle (1) in the cattle shed (4) are selected from the group comprising laser means, infrared means, radiographical means and induction means.

3. An apparatus for cleaning a stable according to one of the claims 1-2, **characterized in that** the means (7) for determining the position of the vehicle (1) in the cattle shed (4) comprise recorders connected with the wheels (5, 6) for registering the number of revolutions of the wheels (5, 6) and the position of the wheel (6) that determines the vehicle's direction.

4. An apparatus for cleaning a stable according to one of the claims 1-3, **characterized in that** means are provided for the calibration of the memory-stored position of the vehicle (1) in the cattle shed (4).

5. An apparatus for cleaning a stable according to one of the preceding claims, **characterized in that** the vehicle (1) is provided with an energy storage unit for the motor drive, and that while the energy storage unit is connected with a charging device provided in the cattle shed (4), the vehicle's position stored in the memory is adjusted to a preselected absolute value that represents the position of the charging device in the cattle shed (4).

6. An apparatus for cleaning a stable according to one of the claims 1-5, **characterized in that** at least the front (A) and rear (B) of the vehicle (1) be provided with sensor means for the perception of an obstacle such as a cow, another animal or a person.

7. An apparatus for cleaning a stable according to one of the claims 1-6, **characterized in that** the control unit (8) is equipped to register the energy level in the energy storage unit, so that if the energy level falls below a preset value, the control unit (8) will direct the vehicle (1) to the charging device.

## Patentansprüche

1. Eine Vorrichtung zum Reinigen eines Stalls, die einen Reinigungsschieber (2) aufweist, der während der Verwendung derart angeordnet ist, um in dem Mittelgang (3) eine Viehscheune (4) bewegbar zu sein, und die mit einem Motorantrieb zum Bewegen der Vorrichtung als ein autonom bewegbares Fahrzeug versehen ist, an dem der Reinigungsschieber (2) befestigt ist, und die mit Radbaugliedern (5, 6) versehen ist, **dadurch gekennzeichnet, daß** dieselbe eine Steuerungseinheit (8) aufweist, die mit einer Sensoreinrichtung verbunden ist, und die Steuerungseinheit (8) eine Steuerungslogik zum Emittieren von einem sensoreinrichtungsabhängigen Steuerungssignal zu dem Motorantrieb aufweist, und daß zumindest eines (6) der Räder (5, 6) zum Bestimmen der Richtung des Fahrzeugs einstellbar ist, daß das Fahrzeug (1) mit einer Einrichtung (7) zum Bestimmen von dessen Position in der Viehscheune (4) versehen ist, die mit Markierungen (9) zusammenarbeiten, die in der Viehscheune positioniert sind, und daß die Steuerungseinheit (8) mit einem Speicher zum Speichern von Daten über die Viehscheune (4), die Position des Fahrzeugs (1) in der Viehscheune (49) und einem Plan der Route entlang der sich das Fahrzeug (1) in der Viehscheune (4) bewegen soll, ausgerüstet ist.

2. Eine Vorrichtung zum Reinigen eines Stalls gemäß Anspruch 1, **dadurch gekennzeichnet, daß** die Einrichtung (7) zum Bestimmen der Position des Fahrzeugs (1) in der Viehscheune (4) aus der Gruppe ausgewählt ist, die aus einer Lasereinrichtung, einer Infraroteinrichtung, einer radiographischen Einrichtung und einer Induktionseinrichtung besteht.

3. Eine Vorrichtung zum Reinigen eines Stalls gemäß einem der Ansprüche 1 bis 2, **dadurch gekennzeichnet, daß** die Einrichtung (7) zum Bestimmen der Position des Fahrzeugs (1) in der Viehscheune (4) Aufzeichenvorrichtungen aufweist, die mit den Rädern (5, 6) verbunden sind, zum Registrieren der Anzahl von Umdrehungen der Räder (5, 6) und der Position des Rades (6), das die Richtung des Fahrzeugs bestimmt.

4. Eine Vorrichtung zum Reinigen eines Stalls gemäß einem der Ansprüche 1 bis 3, **dadurch gekennzeichnet, daß** die Einrichtung für die Kalibrierung der Speichergespeicherten Position des Fahrzeugs (1) in der Viehscheune (4) vorgesehen ist.

5. Eine Vorrichtung zum Reinigen eines Stalls gemäß einem der vorangehenden Ansprüche, **dadurch gekennzeichnet, daß** das Fahrzeug (1) mit einer Energiespeicherungseinheit für den Motorantrieb verbunden ist, und daß während die Energiespeicherungseinheit mit einer Ladeeinrichtung versehen ist, die in der Viehscheune (4) vorgesehen ist, die Position des Fahrzeugs, die in dem Speicher gespeichert ist, auf einen vorausgewählten Absolutwert eingestellt wird, der die Position der Ladevorrichtung in der Viehscheune (4) darstellt.

6. Eine Vorrichtung zum Reinigen eines Stalls gemäß einem der Ansprüche 1 bis 5, **dadurch gekennzeichnet, daß** zumindest die Vorderseite (A) und die Rückseite (B) des Fahrzeugs (1) mit einer Sensoreinrichtung für die Wahrnehmung eines Hindernisses versehen sind, wie z. B. einer Kuh, eines anderen Tieres oder einer Person.

7. Eine Vorrichtung zum Reinigen eines Stalls gemäß einem der Ansprüche 1 bis 6, **dadurch gekennzeichnet, daß** die Steuerungseinheit (8) ausgerüstet ist, um den Energiepegel in der Energiespeicherungseinheit zu registrieren, so daß, wenn der Energiepegel unter einen voreingestellten Wert fällt, die Steuerungseinheit (8) das Fahrzeug (1) zu der Ladevorrichtung leitet.

## Revendications

1. Appareil pour nettoyer des locaux d'élevage, comprenant une lame de nettoyage (2) qui, au cours de l'utilisation, est disposé de manière à être mobile dans une allée (3) d'un hangar à bétail (4), et qui est équipé d'un entraînement par moteur pour déplacer l'appareil comme un véhicule autonome mobile sur lequel la lame de nettoyage (2) est montée, et qui est fourni avec des éléments de roue (5, 6), **caractérisé en ce qu'**il comprend une unité de commande (8) qui est connectée à des moyens formant capteur et l'unité de commande (8) comprenant une logique de commande pour émettre un signal de commande dépendant des moyens formant capteur pour l'entraînement par moteur, et **en ce que** au moins l'une (6) des roues (5, 6) est réglable pour déterminer la direction du véhicule, **en ce que** le véhicule (1) est équipé de moyens (7) pour déterminer sa position dans le hangar à bétail (4), qui collaborent avec des marqueurs (9) positionnés dans le hangar à bétail, et **en ce que** l'unité de commande (8) est équipée d'une mémoire pour stocker des données qui se rapportent au hangar à bétail (4), à la position du véhicule (1) dans le hangar à bétail (4), et à un plan de l'itinéraire le long duquel le véhicule (1) doit se déplacer dans le hangar à bétail (4).

2. Appareil pour nettoyer des locaux d'élevage selon la revendication 1, **caractérisé en ce que** les moyens (7) pour déterminer la position du véhicule (1) dans le hangar à bétail (4) sont choisis dans le groupe comprenant des moyens de laser, des moyens d'infrarouges, des moyens de radiographie et des moyens d'induction.

3. Appareil pour nettoyer des locaux d'élevage selon l'une quelconque des revendications 1 ou 2, **caractérisé en ce que** les moyens (7) pour déterminer la position du véhicule (1) dans le hangar à bétail (4) comprennent des enregistreurs connectés aux roues (5, 6) pour enregistrer le nombre de tours de roues (5, 6) et la position de la roue (6) qui détermine la direction du véhicule.

4. Appareil pour nettoyer des locaux d'élevage selon l'une quelconque des revendications 1 à 3, **caractérisé en ce que** des moyens sont fournis pour le calibrage de la position du véhicule (1) stockée en mémoire, dans le hangar à bétail (4).

5. Appareil pour nettoyer des locaux d'élevage selon l'une quelconque des revendications précédentes, **caractérisé en ce que** le véhicule (1) est fourni avec une unité de stockage d'énergie pour l'entraînement du moteur, et **en ce que**, tandis que l'unité de stockage d'énergie est connectée à un dispositif de charge fourni dans le hangar à bétail (4), la position du véhicule stockée dans la mémoire est réglée à une valeur absolue présélectionnée qui représente la position du dispositif de charge dans le hangar à bétail (4).

6. Appareil pour nettoyer des locaux d'élevage selon l'une quelconque des revendications 1 à 5, **caractérisé en ce que** au moins l'avant (A) et l'arrière (B) du véhicule (1) sont équipés de moyens formant capteur pour la perception d'un obstacle tel qu'une vache, un autre animal ou une personne.

7. Appareil pour nettoyer des locaux d'élevage selon l'une quelconque des revendications 1 à 6, **caractérisé en ce que** l'unité de commande (8) est équipée pour enregistrer le niveau d'énergie dans l'unité de stockage d'énergie, de telle sorte que si le niveau d'énergie tombe au-dessous d'une valeur préréglée, l'unité de commande (8) dirige le véhicule (1) vers le dispositif de charge.
